# EUROPEAN PATENT SPECIFICATION

(11) **EP 3 808 902 B1**
(45) Date of publication and mention of the grant of the patent: **30.03.2022**
(21) Application number: 19203940.2
(22) Date of filing: 17.10.2019
(51) Int. Cl.: E02B 5/08, F04B 1/02, F04B 23/04

(54) **HYDRAULIC GRINDER FOR WATER FILTRATION**
HYDRAULISCHE SCHLEIFMASCHINE FÜR WASSERFILTRATION
BROYEUR HYDRAULIQUE POUR LA FILTRATION DE L'EAU

(43) Date of publication of application: 21.04.2021
(73) Proprietor: API S.P.A., 20089 Rozzano (IT)
(72) Inventor:
(74) Representative: Pasquino, Fabio

(56) References cited:
- GB-A- 2 529 909
- KR-U- 20100 002 332

## Description

### Field of the Invention

The present invention relates to a hydraulic rake screen for water filtration. In particular, the present invention relates to a hydraulic rake screen with reduced energy consumption, reduced cycle time and low environmental impact.

### Background Art

Screening is the first operation that must be considered in transport and water supply systems, such as draining pump implants and irrigation channels. Screening is intended to intercept and eliminate large bodies that could damage the equipment of the systems or obstruct the pipes and channels and is particularly important upstream of the lifting stations.

Screening operations are carried out by means of suitable hydraulic rake screens arranged at a penstock. A filtering screen prevents the passage through the penstock of elements having dimensions greater than those of the filtering opening of the aforementioned filtering screen. The blocked elements are subsequently removed by a movable rack, or scraping comb, which goes up along the filtering screen to convey the debris collected in a suitable drain, and convey them to the drain placed on the top of the filtering screen. Typically, the filtered material is discharged by gravity, directly into a collection box, or by using a conveyor belt, which removes the aforementioned debris.

Screening operations are carried out by moving the movable rack during the cleaning cycle of the filtering screen, according to what is provided by the controller of the hydraulic rake screen used. In particular, the handling of the movable rack is ensured by the employment of suitable hydraulic devices which define its handling cycle, which comprises both the scraping operations of the filtering screen, and the operations for arranging the movable rack in the working position. The differences between the aforementioned operations define shifts that involve different extensions and loads, in particular the scraping operations are the most burdensome.

In this regard, hydraulic rake screens are known which are provided with separate hydraulic handling devices, each of which allows to carry out the movements connected with one of the aforementioned operations. In particular, for example a main oleodynamic cylinder is employed for the steps of ascent and descent of the movable rack in scraping operations, while a secondary oleodynamic cylinder is used in the steps of removal and approach of the movable rack with respect to the filtering screen in the disposal operations in working position.

In view of the considerable difference in cubic capacity between the main oleodynamic cylinder and the secondary oleodynamic cylinder, it is preferable to separate the servo pumps by maintaining a single driving, allowing an optimization of production and management costs also in this sense. For example, a high flow rate main pump is used to supply the main oleodynamic cylinder and a low flow rate secondary pump to supply the secondary oleodynamic cylinder.

A problem relating to the aforementioned solutions consists, however, in the fact that one of the most relevant parameters for hydraulic rake screens is the cycle time, that is the time to complete a complete cleaning cycle of the filtering screen. Such cycle time is a function of the cubic capacity of each of the aforementioned main and secondary cylinders, of the bore and of the stroke, as well as of the flow rate of the relative main and secondary pumps. The flow rate is therefore usually increased to reduce the cycle time. On the other hand, in the situation of greater demand for pressure, corresponding to the ascending handling of the main oleodynamic cylinder, the increase in flow rate causes an increase in energy consumption and the consequent need to install greater electrical power.

It would therefore be desirable to have a hydraulic rake screen for water filtration capable of minimizing the abovementioned drawbacks. In particular, it would be desirable to have a hydraulic rake screen capable of reducing the cycle time by reducing the necessary electrical power.

A further problem deriving from the use of hydraulically operated handling devices is the assessment and analysis of the impact that an apparatus of the aforementioned kind has with respect to the environment in which it is installed.

It would therefore be desirable to have a monitoring system of the accidental leakages of oleodynamic circuits capable of minimizing the drawbacks described above.

Document KR 2010 0002332 U discloses an hydraulic rake screen for water filtration according to the preamble of claim 1.

### Summary of the Invention

The object of the present invention is to provide a hydraulic rake screen for water filtration capable of minimizing the aforementioned problems.

In particular, an object of the present invention is to provide a hydraulic rake screen capable of reducing the cycle time with respect to known hydraulic rake screens.

A further object of the present invention is to provide a hydraulic rake screen capable of reducing the energy consumption associated with it, as well as the related production and maintenance costs.

Finally, an object of the present invention is to provide a hydraulic rake screen capable of minimizing its environmental impact, with a monitoring system of accidental leakage of oleodynamic circuits and by inserting suitable pressure transmitters which stop the driving pumps and consequently the outflow of hydraulic fluid outwards.

The aforesaid objects are achieved by a hydraulic rake screen for water filtration, according to the appended claims.

The hydraulic rake screen comprises:
- a filtering screen;
- a movable rack, movable with respect to the filtering screen;
- a hydraulic handling system comprising a first hydraulic handling device, able to move the movable rack between a stroke starting position, wherein the movable rack is arranged at the base of the filtering screen, and a stroke final position, wherein the movable rack is arranged at the top of the filtering screen, and vice versa, and a second hydraulic handling device, able to move the movable rack between a working position, wherein the movable rack is adjacent to the filtering screen, and a rest position, wherein the movable rack is spaced from the filtering screen, and vice versa;
- an actuating system of the hydraulic handling system, comprising a hydraulic circuit provided with a first driving pump of the first hydraulic device and a second driving pump of the second hydraulic device and comprising a controller;
- the controller being able to arrange the first driving pump and the second driving pump in fluid communication with the first hydraulic handling device to define a driving flow rate of the first hydraulic handling device equal to the sum of the flow rates of the first driving pump and of the second driving pump when the controller drives the first hydraulic handling device moving the movable rack between the stroke final position and the stroke starting position.

In this way, it is possible to increase the flow rate available to the first hydraulic device by minimizing the relative energy expenditure and the operating cycle time of the rake screen.

Preferably, the actuating system comprises a diverter solenoid valve arranged in the hydraulic circuit and operatively connected to the controller,
wherein the diverter solenoid valve is able to divert the fluid leaving the second driving pump to the first hydraulic handling device to increase the flow rate of the first hydraulic handling device when the controller drives the first hydraulic handling device moving the movable rack between the stroke final position and the stroke starting position.

In this way, the flow rate intended for the first hydraulic handling device is increased by means of the fluid intended for the second handling device, i.e. by arranging both its own fluid and that supplied by the second hydraulic handling device in the first hydraulic handling device. During this overlapping of the flow rates step, the second hydraulic handling device is hydraulically excluded from the process.

According to the present invention, the first hydraulic handling device comprises a first hydraulic actuator and the second hydraulic handling device comprises a second hydraulic actuator, in which the first and second hydraulic actuators are independent and connected to the movable rack.

According to the present invention, each of the first and second hydraulic actuators comprises a single-rod telescopic oleodynamic cylinder, or alternatively, at least one of the first and second hydraulic actuators comprises a telescopic oleodynamic cylinder with two or more rods.

According to the present invention, the single-rod telescopic oleodynamic cylinder or the two or more-rods telescopic oleodynamic cylinder comprises a drain valve arranged on the head of the telescopic oleodynamic cylinder and able to increase the drain surface during the handling between the stroke starting position and the stroke final position.

In this way, it is possible to create a quick drain system to reduce the back pressure in ascent, speed up the oil drain and facilitate the ascent of the movable rack by working at reduced pressures.

Preferably, the cubic capacity of the first hydraulic actuator is greater than the cubic capacity of the second hydraulic actuator.

This is because the shift and the loads to which the first hydraulic handling device is subjected are greater than the shifts and loads to which the second hydraulic handling device is subjected.

Preferably, the first driving pump and the second driving pump are independent.

Even more preferably, the flow rate of the first driving pump is greater than the flow rate of the second driving pump.

In this regard, the greater flow rate allows the related first hydraulic handling device with the greater cubic capacity to be served.

Preferably, the actuating system comprises a single electric motor able to driving the first and second driving pumps.

Preferably, the actuating system comprises a first pressure transmitter and a second pressure transmitter independent and arranged in the hydraulic circuit,
wherein the first pressure transmitter is operatively connected to the first driving pump to stop the first driving pump if the pressure value reaches a predetermined pressure value, and
wherein the second pressure transmitter is operatively connected to the second driving pump to stop the second driving pump if the pressure value reaches a predetermined pressure value.

This allows to minimize the components, the energy expenditure associated with the management of the rake screen and the environmental impact deriving from the hydraulic oil spill.

### Description of the figures

These and further features and advantages of the present invention will become apparent from the disclosure of the preferred embodiment, illustrated by way of a non-limiting example in the accompanying figures, wherein:

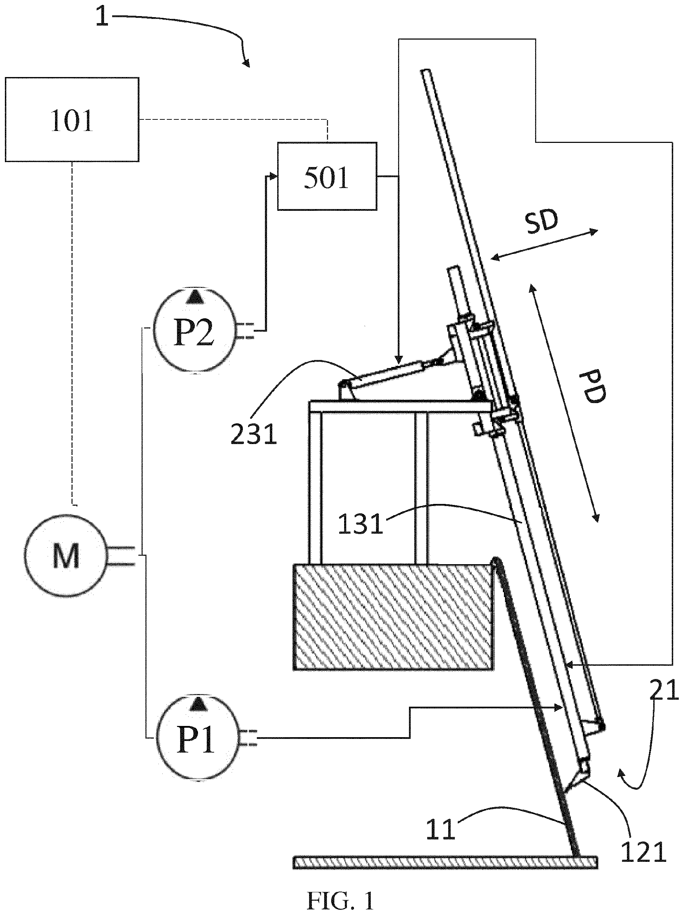

- Figure 1 is a schematic side view of the hydraulic rake screen, according to the present invention.

### Detailed description of the invention

With reference to Figure 1, a preferred embodiment of the hydraulic rake screen 1 for water filtration is illustrated, according to the present invention, installed at a penstock intended for the passage of water.

In the description that follows, reference will be made to an oleodynamic rake screen capable of operating in the field of decontamination and purification on channels and waterways to keep the filtering screens clean to protect pumps and turbines. The cleaning cycle of the filtering screen is guaranteed by the presence of a movable rack that moves by means of suitable hydraulic actuators, in particular of oleodynamic cylinders.

Figure 1 illustrates an exemplification of the hydraulic rake screen 1 with respect to the mechanical components, as compared to the electrical/electronic and hydraulic components, in particular the oleodynamic ones as described in greater detail below.

The hydraulic rake screen 1 comprises a filtering screen 11 and a movable rack 21 with respect to the aforementioned filtering screen 11. Thus, the filtering screen 11 defines the fixed portion of the hydraulic rake screen 1 while the movable rack 21 defines the movable portion of the same hydraulic rake screen 1.

The filtering screen 11 is inclined with respect to the vertical plane of the hydraulic duct to which it is installed, preferably with an angle of inclination equal to 15° in the direction of water flow. This filtering screen 11 is preferably made of steel, for example hot-galvanized carbon steel, and comprises a plurality of bars, the spacing of which defines the filtering opening. Moreover, the lower portion of the bars can be shaped in such a way as to facilitate the raking operation of the rake 121, below described, for example by means of a suitable shaping.

The movable rack 21 preferably comprises a carriage, also made of steel, on which a rake 121 for removing debris is coupled. The rake could also be replaced by a different debris collection system, for example a rotating comb, or by other systems of a known type not further described. The rake 121 is preferably made from a plurality of teeth whose mutual spacing and size is such as to allow insertion into the filtration openings.

The aforementioned carriage is also constrained to a fixed support structure for the rotation thereof with respect to a rotation point.

The movable rack 21 is able to be moved by a hydraulic handling system along a main direction PD and along a secondary direction SD, as illustrated by the arrows in Figure 1. In particular, the main direction PD defines the shift that identifies the stroke starting position and the stroke final position of the movable rack 21, or of the rake 121, with respect to the filtering screen 11. On the contrary, the direction SD defines the shift that identifies the working position and the rest position of the movable rack 21, or of the rake 121, with respect to the filtering screen 11. The aforesaid secondary direction SD can also be defined by a rotation of the carriage which moves the rake 121 as in the present embodiment.

*"Stroke starting position"* means, in the present invention, the position in which the movable rack 21, or rake 121, is arranged at the base of the filtering screen 11.

*"Stroke final position"* means, in the present invention, the position in which the movable rack 21, or rake 121, is arranged at the top of the filtering screen 11.

*"Working position"* means, in the present invention, the position in which the movable rack 21, or rake 121, is adjacent to the filtering screen 11.

*"Rest position"* means, in the present invention, the position in which the movable rack 21, or rake 121, is spaced from the filtering screen 11.

In Figure 1, the movable rack 21, or rake 121, is illustrated in the stroke starting position and in the working position, to start the cleaning cycle by means of the hydraulic rake screen 1.

The aforementioned hydraulic handling system comprises a first hydraulic handling device 131, able to move the movable rack 21 between the stroke starting position and the stroke final position and vice versa, and a second hydraulic handling device 231, able to move the movable rack 21 between the working position and vice versa.

In the present embodiment the first hydraulic handling device 131 comprises a first hydraulic actuator of the single-rod oleodynamic cylinder type and, in the same way, the second hydraulic handling device 231 comprises a second hydraulic actuator always of the single-rod oleodynamic cylinder type. In view of the application for which are intended, that is the handling, the aforementioned first and second hydraulic actuators, or the relative oleodynamic cylinders, have different cubic capacities. In particular, the first hydraulic actuator has a greater cubic capacity compared to the second hydraulic actuator, because the shift and the loads to which the first hydraulic handling device is subjected are greater than the shifts and loads to which the second hydraulic handling device is subjected.

The term *"cubic capacity"* means, in the present invention, the volume of liquid handled (stroke per bore) from the dead point below the dead top centre of each hydraulic actuator, or of each oleodynamic cylinder used.

According to alternative embodiments, one or both of the aforementioned first and second hydraulic actuators can be of the telescopic oleodynamic cylinder type with two or more rods. For example, the first hydraulic actuator, the one that has to handle the movable rack 21 for a greater distance can be of the telescopic oleodynamic cylinder type with two or more rods, while the second hydraulic actuator, intended for handling the movable rack 21 for a shorter distance, can be of the single-rod oleodynamic cylinder type.

According to a further embodiment, not illustrated, the single-rod telescopic oleodynamic cylinder or the two or more-rods telescopic oleodynamic cylinder comprises a drain valve arranged on the head of the telescopic oleodynamic cylinder and able to increase the drain surface during the handling between the stroke starting position and the stroke final position.

During handling from the stroke starting position to the stroke final position, the main cylinder has a completely open rod and the back pressure generated downstream of the piston, that is on the oil return line to the control unit, can hinder the cylinder ascent until the limit imposed by the safety valve is reached. Moreover, in this ascent step the oil works on a net surface which is equal to the difference between the inner diameter of the liner and the diameter of the rod. Such effect is even more amplified when using telescopic cylinders with two or more rods.

Therefore, on the cylinder head, usually provided with a plug, a drain valve is installed, of the unidirectional type with a hydraulically piloted opening, which, during the ascent step, allows to increase the drain surface. The employment of the drain valve allows to reduce the back pressure in ascent, speed up the oil drain in the control unit and facilitate the ascent of the movable rack by working at reduced pressures.

However, the first hydraulic actuator and the second hydraulic actuator are both connected to the movable rack 21 but designed to be independent to each other, or to operate the relative handling independently to each other.

The driving of the hydraulic handling systems is achieved by means of an actuating system of the hydraulic handling systems which comprises a hydraulic circuit provided with a first driving pump P1 able to supply the first hydraulic handling device 131, that is the first hydraulic actuator, and of a second driving pump P2 able to supply the second hydraulic handling device 231, or the second hydraulic actuator, illustrated by way of continuous lines in Figure 1. Furthermore, the actuating system of the hydraulic handling systems comprises a controller 101, operatively connected to the components of the hydraulic rake screen 1 by an electric/electronic circuit illustrated by way of example with dashed lines in Figure 1.

The controller 101 is preferably made by means of a PLC which defines the hydraulic control unit of the hydraulic rake screen 1, that is the device by means of which to control the pumping assembly and the solenoid valves part of the hydraulic circuit.

The hydraulic actuating system further comprises a single electric motor M able to drive suitable driving pumps of the hydraulic handling systems.

In view of the flow rates of the relative hydraulic actuators to be handled, the flow rate of the first pump P1 is greater than the flow rate of the second pump P2. The greater flow rate allows, in fact, the related first hydraulic handling device 131 with the greater cubic capacity to be served.

As previously described for the hydraulic actuators, also the first pump P1 and the second pump P2 are independent. This allows to minimize the components and the energy expenditure associated with the management of the hydraulic rake screen 1 object of the present invention.

The first hydraulic handling device 131 and the second hydraulic handling device 231 are operatively connected to the aforementioned hydraulic circuit, for example through the aforementioned first driving pump P1 and second driving pump P2, respectively. Furthermore, a diverter solenoid valve 501 is arranged in the aforementioned hydraulic circuit and is part of the hydraulic actuating system, allowing the diversion of fluid leaving the second driving pump P2 in view of the command of the controller 101 to which it is operatively connected. Further solenoid valves are comprised in the hydraulic circuit to define the handling operations of the first 131 and the second 231 hydraulic devices when they operate independently for the execution of the cleaning cycle steps subsequently described in greater detail. These solenoid valves, of the known type, will not be further described.

Both the diverter solenoid valve 501 and the further solenoid valves part of the hydraulic circuit are controlled, as described above, by the controller 101 electrically/electronically connected thereto in an electric/electronic circuit part of the hydraulic rake screen 1.

The controller 101 is, in fact, adapted to arrange the delivery of the first driving pump P1 and the delivery of the second driving pump P2 in fluid communication with the first hydraulic handling device 131 to define a driving flow rate of the first hydraulic handling device 131 equal to the sums of the flow rates of the first driving pump P1 and of the second driving pump P2 when the controller 101 drives the first hydraulic handling device 131 handling the movable rack 21 between the stroke final position and the stroke starting position.

In particular, the diverter solenoid valve 501 is able to divert the fluid leaving the second driving pump P2 to the first hydraulic handling device 131 to increase the flow rate to the aforesaid first hydraulic handling device 131 when the controller 101 drives the first hydraulic handling device 131 handling the movable rack 21 between the stroke final position and the stroke starting position.

In the following, the method of cleaning by means of the hydraulic rake screen 1 according to the present invention will be described by way of example, taking into consideration the handling with respect to the aforesaid stroke starting position, stroke final position, working position and rest position. The aforesaid cleaning method allows the filtering screen 11 to block the bodies in suspension larger than the filtering opening, to lift them out of the water flow by means of the movable rack 21 and to convey them to the drain, located in the top of the filtering screen 11.

The cleaning method comprises a four-step cycle:
- approaching step, in which the movable rack 21 is approached to the filtering screen 11, handling it from the rest position to the working position;
- ascending step, in which the movable rack 21 is arranged at the base of the filtering screen 11, handling it from the stroke starting position to the stroke final position;
- removing step, in which the movable rack 21 is removed from the filtering screen 11, handling it from the working position to the rest position;
- descending step, in which the movable rack 21 is arranged at the base of the filtering screen 11, handling it from the stroke starting position to the stroke final position.

During the approaching step, the hydraulic handling system, in particular the second hydraulic handling device 231 connected to the carriage, imparts a handling to the movable rack 21 along the secondary direction SD such as to arrange it from the rest position to the working position. In particular, the rake 121 is rotated, or in the same way linearly handled, and such a rotation, or linear handling, causes the teeth of the rake 121 to follow the shape of the bars of the filtering screen 11. The rotation, or linear handling, causes the teeth of the rake 121 to gradually enter the bars at the same time conveying the bottom material towards the same and then cleaning the filtering screen 11 vertically.

During the ascending step, the hydraulic handling system, in particular the first hydraulic handling device 131 connected to the carriage, imparts a handling to the movable rack 21 along the main direction PD such as to arrange it from the stroke starting position to the stroke final position. The handling adjacent to the filtering screen 11 causes the material in suspension at the same filtering screen 11 to be collected without allowing the outflow thereof from the rake 121. At the end of the ascending step, the movable rack 21 drains the screened material, or the collected material, at the top of the filtering screen 11.

During the removing step, the hydraulic handling system, in particular the second hydraulic handling device 231 connected to the carriage, imparts a handling to the movable rack 21 along the secondary direction SD such as to arrange it from the working position to the rest position. In particular, the rake 121 is rotated, or in the same way handled in a linear manner, and such rotation, or linear movement, causes the teeth of the rake 121 to be removed from the bars of the filtering screen 11 by a sufficient and predetermined extent, such as to allow the subsequent handling without interfering with the filtering screen 11 or the new material accumulated in the meantime therein.

Being independent, the aforementioned steps of approaching, ascending and removing are carried out by the independent action of the hydraulic handling devices 131, 231, in particular of the first hydraulic actuator for the ascending step and of the second hydraulic actuator for the approaching and removing steps.

Finally, in the descending step the hydraulic handling system imparts to the movable rack 21 a handling along the main direction PD such as to arrange it again from the stroke final position to the stroke starting position. The handling spaced from the filtering screen 11 causes the rake 121 to reposition itself at the base of the filtering screen 11 without having impact with the bars of the same filtering screen 11 or with the redeposited material to be collected with a new cleaning cycle.

In this descending step, the oil flow rate intended to the first hydraulic handling device 131 is equal to the sum of the flow rates of each of the first driving pumps P1 and of the second driving pump P2, used in combined action to obtain the flow rate increase as to allow a reduction of the cycle time in the said descending step. Thus, the descending step is actually carried out by the first hydraulic handling device 131 but with the flow rate increase described above with respect to the handling of the same first hydraulic handling device 131 during the ascending step.

The fluid communication of both the first driving pump P1 and the second driving pump P2 with the first hydraulic handling device 131 is obtained by means of the diverter solenoid valve 501, controlled by the controller 101. In the descending step, the diverter solenoid valve 501 is able to divert the fluid of the circuit leaving from the second driving pump P2 and intended to the second hydraulic handling device 231 for movement to the fluid of the first hydraulic handling device 131 for the purpose of increasing the driving flow rate of the aforementioned first hydraulic handling device 131. This fluid deviation is achieved when the controller 101 drives the first hydraulic handling device 131, handling the movable rack 21 between the stroke final position and the stroke starting position.

In this way, it is possible to increase the flow rate of the first hydraulic device 131 by minimizing the relative energy expenditure and the operating cycle time of the hydraulic rake screen 1, in particular in the aforementioned descending step. In this step, in fact, given the low working pressures, it is possible to superimpose the flow rates by minimizing energy expenditure, as opposed to the ascending step.

In relation to the considerable cubic capacity difference between the first hydraulic handling device 131 and the second hydraulic handling device 231, the relative first P1 and second P2 pumps are consequently designed to supply the first hydraulic handling device 131 at high flow rate and the second hydraulic handling device 231 at low flow rate. The independent management of the aforementioned first 131 and second 231 hydraulic handling devices during the approaching, ascending and removing steps allows a nominal flow rate to be used such as to ensure an acceptable energy consumption with regard to the pressures involved, in particular the pressures generated during the ascending phase.

In the same way, the management of the fluid communication allows to increase the flow rate, and consequently reduce the cycle time, without impacting on the pressures involved in the descending step, therefore without negatively impacting the energy expenditure required to complete the same descending step.

In a further embodiment, not shown, the actuating system of the hydraulic rake screen according to the present invention comprises a first pressure transmitter and a second pressure transmitter independent to each other and arranged in the hydraulic circuit. In particular, the first pressure transmitter is operatively connected to the first driving pump to stop the first driving pump if the pressure value reaches a predetermined pressure value. Similarly, the second pressure transmitter is operatively connected to the second driving pump to stop the second driving pump if the pressure value reaches a predetermined pressure value.

This allows to minimize the components, the energy expenditure associated with the management of the rake screen and the environmental impact deriving from the hydraulic oil spill.

## Claims

1. Hydraulic rake screen (1) for water filtration comprising:
- a filtering screen (11);
- a movable rack (21) movable with respect to said filtering screen (11);
- a hydraulic handling system comprising a first hydraulic handling device (131), able to move said movable rack (21) between a stroke starting position, wherein said movable rack (21) is arranged at the base of the filtering screen (11), and a stroke final position, wherein said movable rack (21) is arranged at the top of said filtering screen (11), and vice versa, and a second hydraulic handling device (231), able to move said movable rack (21) between a working position, wherein said movable rack (21) is adjacent to said filtering screen (11), and a rest position, wherein said movable rack (21) is spaced from said filtering screen (11), and vice versa;
the hydraulic rake screen being **characterized in that**
the hydraulic rake screen further comprises:
- an actuating system of said hydraulic handling system, comprising a hydraulic circuit provided with a first driving pump (P1) of said first hydraulic device (131) and a second driving pump (P2) of said second hydraulic device (231) and comprising a controller (101);
wherein said first hydraulic handling device (131) comprises a first hydraulic actuator and said second hydraulic handling device (231) comprises a second hydraulic actuator; and
wherein each of said first and second hydraulic actuators comprises a single-rod telescopic oleodynamic cylinder or alternatively wherein at least one of said first and
second hydraulic actuators comprises a telescopic oleodynamic cylinder with two or more rods; wherein said first and second hydraulic actuators are independent and connected to said movable rack (21); wherein said controller (101) is able to arrange said first driving pump (P1) and said second driving pump (P2) in fluid communication with said first hydraulic handling device (131) to define a driving flow rate of said first hydraulic handling device (131) which is equal to the sum of the flow rates of said first driving pump (P1) and of said second driving pump (P2) when said controller (101) drives said first hydraulic handling device (131) moving said movable rack (21) between said stroke final position and said stroke starting position; and
wherein said single-rod telescopic oleodynamic cylinder or said telescopic oleodynamic cylinder with two or more rods comprises a drain valve arranged on the head of said telescopic oleodynamic cylinder and able to increase the drain surface during the handling between said stroke starting position and said stroke final position.

2. Hydraulic rake screen (1) according to claim 1, wherein said actuating system comprises a diverter solenoid valve (501) arranged in said hydraulic circuit and operatively connected to said controller (101),
wherein said diverter solenoid valve (501) is able to divert the fluid leaving said second driving pump (P2) to said first hydraulic handling device (131) to increase the flow rate of said first hydraulic handling device (131) when said controller (101) drives said first hydraulic handling device (131) moving said movable rack (21) between said stroke final position and said stroke starting position.

3. Hydraulic rake screen (1) according to claim 1 or 2, wherein the cubic capacity of said first hydraulic actuator is greater than the cubic capacity of said second hydraulic actuator.

4. Hydraulic rake screen (1) according to one or more claims from 1 to 3, wherein said first driving pump (P1) and said second driving pump (P2) are independent.

5. Hydraulic rake screen (1) according to one or more claims from 1 to 4, wherein the flow rate of said first driving pump (P1) is greater than the flow rate of said second driving pump (P2).

6. Hydraulic rake screen (1) according to one or more claims from 1 to 5, wherein said actuating system comprises a single electric motor (M) able to actuate said first (P1) and second (P2) driving pumps.

7. Hydraulic rake screen (1) according to one or more claims from 1 to 6, wherein said actuating system comprises a first pressure transmitter and a second pressure transmitter independent to each other and arranged in said hydraulic circuit,
wherein said first pressure transmitter is operatively connected to said first driving pump (P1) to stop said first driving pump (P1) if the pressure value reaches a predetermined pressure value, and
wherein said second pressure transmitter is operatively connected to said second driving pump (P2) to stop said second driving pump (P2) if the pressure value reaches a predetermined pressure value.

## Patentansprüche

1. Hydraulischer Rechen (1) für die Wasserfiltration, umfassend:
- ein Filtersieb (11);
- ein beweglicher Rahmen (21), der in Bezug auf das Filtersieb (11) beweglich ist (11);
- ein hydraulisches Betätigungssystem, das eine erste Hydraulikvorrichtung (131) umfasst, die in der Lage ist, die bewegliche Zahnstange (21) zwischen einer Hubausgangsposition, in der die bewegliche Zahnstange (21) an der Basis des Filtersiebs (11) angeordnet ist, und einer Hubendposition, in der die bewegliche Zahnstange (21) an der Oberseite des Filtersiebs (11) angeordnet ist, zu bewegen und umgekehrt, und eine zweite Hydraulikvorrichtung (231), die in der Lage ist, die bewegliche Zahnstange (21) zwischen einer Arbeitsposition, in der sich die bewegliche Zahnstange (21) neben dem Filtersieb (11) befindet, und einer Ruheposition, in der die bewegliche Zahnstange (21) von dem Filtersieb (11) beabstandet ist, und umgekehrt zu bewegen;
wobei der hydraulische Rechen **dadurch gekennzeichnet ist, dass** der hydraulische Rechen weiterhin umfasst:
- ein Stellsystem des hydraulischen Betätigungssystems, das einen Hydraulikkreislauf umfasst, der mit einer ersten Antriebspumpe (P1) der ersten Hydraulikvorrichtung (131) und einer zweiten Antriebspumpe (P2) der zweiten Hydraulikvorrichtung (231) versehen ist und eine Steuereinheit (101) umfasst;
wobei die erste Hydraulikvorrichtung (131) einen ersten hydraulischen Stellantrieb umfasst und die zweite Hydraulikvorrichtung (231) einen zweiten hydraulischen Stellantrieb umfasst; und
wobei jeder der ersten und zweiten hydraulischen Stellantriebe einen teleskopischen oleodynamischen Zylinder mit einer Kolbenstange umfasst oder wobei alternativ mindestens einer der ersten und zweiten hydraulischen Stellantriebe einen teleskopischen oleodynamischen Zylinder mit zwei oder mehr Kolbenstangen umfasst;
wobei der erste und der zweite hydraulische Stellantrieb unabhängig sind und mit der beweglichen Zahnstange (21) verbunden sind;
wobei die Steuereinheit (101) in der Lage ist, die erste Antriebspumpe (P1) und die zweite Antriebspumpe (P2) in Strömungsverbindung mit der ersten Hydraulikvorrichtung (131) anzuordnen, um eine Antriebsflussrate der ersten Hydraulikvorrichtung (131) zu definieren, die gleich der Summe der Flussraten der ersten Antriebspumpe (P1) und der zweiten Antriebspumpe (P2) ist, wenn die Steuereinheit (101) die erste Hydraulikvorrichtung (131) antreibt, die die bewegliche Zahnstange (21) zwischen der Hubendposition und der Hubausgangsposition bewegt; und
wobei der oleodynamische Teleskopzylinder mit einer Kolbenstange oder der oleodynamische Teleskopzylinder mit zwei oder mehr Kolbenstangen ein Ablassventil umfasst, das am Kopf des oleodynamischen Teleskopzylinders angeordnet ist und in der Lage ist, die Ablassfläche während der Betätigung zwischen der Hubausgangsposition und der Hubendposition zu vergrößern.

2. Hydraulischer Rechen (1) gemäß Anspruch 1, wobei das Betätigungssystem ein Umlenkmagnetventil (501) umfasst, das in dem Hydraulikkreislauf angeordnet und mit der Steuereinheit (101) funktional verbunden ist, wobei das Umlenkmagnetventil (501) in der Lage ist, die die zweite Antriebspumpe (P2) verlassende Flüssigkeit zu der ersten Hydraulikvorrichtung (131) umzuleiten, um die Flussrate der ersten Hydraulikvorrichtung (131) zu erhöhen, wenn die Steuereinheit (101) die erste Hydraulikvorrichtung (131) ansteuert, die die bewegliche Zahnstange (21) zwischen der Hubendposition und der Hubausgangsposition bewegt.

3. Hydraulischer Rechen (1) gemäß Anspruch 1 oder 2, wobei der Zylinderinhalt des ersten hydraulischen Stellglieds größer ist als der Zylinderinhalt des zweiten hydraulischen Stellglieds.

4. Hydraulischer Rechen (1) gemäß einem oder mehreren der Ansprüche 1 bis 3, wobei die erste Antriebspumpe (P1) und die zweite Antriebspumpe (P2) unabhängig voneinander sind.

5. Hydraulischer Rechen (1) gemäß einem oder mehreren der Ansprüche 1 bis 4, wobei die Flussrate der ersten Antriebspumpe (P1) größer ist als die Flussrate der zweiten Antriebspumpe (P2).

6. Hydraulischer Rechen (1) gemäß einem oder mehreren der Ansprüche 1 bis 5, wobei das Betätigungssystem einen einzigen Elektromotor (M) umfasst, der die erste (P1) und die zweite (P2) Antriebspumpe betätigen kann.

7. Hydraulischer Rechen (1) gemäß einem oder mehreren der Ansprüche 1 bis 6, wobei das Betätigungssystem einen ersten Druckgeber und einen zweiten Druckgeber umfasst, die unabhängig voneinander in dem Hydraulikkreislauf angeordnet sind,
wobei der erste Druckgeber betriebsmäßig mit der ersten Antriebspumpe (P1) verbunden ist, um die erste Antriebspumpe (P1) zu stoppen, wenn der Druckwert einen vorgegebenen Druckwert erreicht, und
wobei der zweite Druckgeber betriebsmäßig mit der zweiten Antriebspumpe (P2) verbunden ist, um die zweite Antriebspumpe (P2) zu stoppen, wenn der Druckwert einen vorgegebenen Druckwert erreicht.

## Revendications

1. Tamis râteau hydraulique (1) pour la filtration de l'eau comprenant :
- un tamis filtrant (11) ;
- une crémaillère mobile (21)par rapport audit tamis filtrant (11) ;
- un système de manutention hydraulique comprenant un premier dispositif de manutention hydraulique (131), apte à déplacer ladite crémaillère mobile (21) entre une position de début de course, ladite crémaillère mobile (21) étant disposée à la base du tamis filtrant (11), et une position finale de course, où ladite crémaillère mobile (21) est disposée au sommet dudit tamis filtrant (11), et vice versa, et un second dispositif de manutention hydraulique (231), apte à déplacer ladite crémaillère mobile (21) entre une position de travail, ladite crémaillère mobile (21) étant adjacente audit tamis filtrant (11), et une position de repos, où ladite crémaillère mobile (21) est écartée dudit tamis filtrant (11), et vice versa ;
le tamis râteau hydraulique étant **caractérisé en ce que** le tamis râteau hydraulique comprend en outre :
- un système d'actionnement dudit système de manutention hydraulique, comprenant un circuit hydraulique pourvu d'une première pompe d'entraînement (P1) dudit premier dispositif hydraulique (131) et d'une seconde pompe d'entraînement (P2) dudit second dispositif hydraulique (231) et comprenant un contrôleur (101) ;
dans lequel ledit premier dispositif de manutention hydraulique (131) comprend un premier actionneur hydraulique et ledit deuxième dispositif de manutention hydraulique (231) comprend un deuxième actionneur hydraulique ; et
dans lequel chacun desdits premier et deuxième actionneurs hydrauliques comprend un cylindre oléodynamique télescopique à tige unique ou alternativement dans lequel au moins un desdits premier et deuxième actionneurs hydrauliques comprend un cylindre oléodynamique télescopique à deux tiges ou plus ;
dans lequel lesdits premier et deuxième actionneurs hydrauliques sont indépendants et reliés à ladite crémaillère mobile (21) ;
dans lequel ledit contrôleur (101) est capable d'agencer ladite première pompe d'entraînement (P1) et ladite deuxième pompe d'entraînement (P2) en communication fluidique avec ledit premier dispositif de manutention hydraulique (131) pour définir un débit d'entraînement dudit premier dispositif de manutention hydraulique (131) qui est égal à la somme des débits de ladite première pompe d'entraînement (P1) et de ladite deuxième pompe d'entraînement (P2) lorsque ledit contrôleur (101) entraîne ledit premier dispositif de manutention hydraulique (131), déplaçant ladite crémaillère mobile (21) entre ladite position finale de course et ladite position de début de course ; et
dans lequel ledit cylindre oléodynamique télescopique à tige unique ou ledit cylindre oléodynamique télescopique à deux ou plusieurs tiges comprend un clapet de vidange agencé sur la tête dudit cylindre oléodynamique télescopique et apte à augmenter la surface de vidange lors de la manutention entre ladite position de début de course et ladite position finale de course.

2. Tamis râteau hydraulique (1) selon la revendication 1, dans lequel ledit système d'actionnement comprend une électrovanne de dérivation (501) agencée dans ledit circuit hydraulique et fonctionnellement connectée audit contrôleur (101),
dans lequel ladite électrovanne de dérivation (501) est capable de rediriger le fluide quittant ladite deuxième pompe d'entraînement (P2) vers ledit premier dispositif de manutention hydraulique (131) pour augmenter le débit dudit premier dispositif de manutention hydraulique (131) lorsque ledit contrôleur (101) entraîne ledit premier dispositif de manutention hydraulique (131), déplaçant ladite crémaillère mobile (21) entre ladite position finale de course et ladite position de début de course.

3. Tamis râteau hydraulique (1) selon la revendication 1 ou 2, dans lequel la cylindrée dudit premier actionneur hydraulique est supérieure à la cylindrée dudit second actionneur hydraulique.

4. Tamis râteau hydraulique (1) selon une ou plusieurs revendications de 1 à 3, dans lequel ladite première pompe d'entraînement (P1) et ladite seconde pompe d'entraînement (P2) sont indépendantes.

5. Tamisrâteau hydraulique (1) selon une ou plusieurs revendications de 1 à 4, dans lequel le débit de ladite première pompe d'entraînement (P1) est supérieur au débit de ladite seconde pompe d'entraînement (P2).

6. Tamis râteau hydraulique (1) selon une ou plusieurs revendications de 1 à 5, dans lequel ledit système d'actionnement comprend un seul moteur électrique (M) apte à actionner lesdites première (P1) et seconde (P2) pompes d'entraînement.

7. Tamis râteau hydraulique (1) selon une ou plusieurs revendications de 1 à 6, dans lequel ledit système d'actionnement comprend un premier transmetteur de pression et un deuxième transmetteur de pression indépendants l'un de l'autre et disposés dans ledit circuit hydraulique,
dans lequel ledit premier transmetteur de pression est fonctionnellement connecté à ladite première pompe d'entraînement (P1) pour arrêter ladite première pompe d'entraînement (P1) si la valeur de pression atteint une valeur de pression prédéterminée, et
dans lequel ledit deuxième transmetteur de pression est fonctionnellement connecté à ladite deuxième pompe d'entraînement
(P2) pour arrêter ladite deuxième pompe d'entraînement (P2) si la valeur de pression atteint une valeur de pression prédéterminée.
